# EUROPÄISCHE PATENTSCHRIFT

(11) **EP 2 384 289 B1**
(45) Veröffentlichungstag und Bekanntmachung des Hinweises auf die Patenterteilung: **22.02.2017**
(21) Anmeldenummer: 09796374.8
(22) Anmeldetag: 18.12.2009
(51) Int. Cl.: B60P 1/28, B21D 39/03, F16B 5/04

(54) **VERFAHREN ZUR HERSTELLUNG EINER FAHRZEUG-KIPPMULDENANORDNUNG UND FAHRZEUG-KIPPMULDENANORDNUNG**
METHOD FOR THE PRODUCTION OF A DUMP BODY ARRANGEMENT FOR A VEHICLE, AND DUMP BODY ARRANGEMENT FOR A VEHICLE
PROCÉDÉ DE FABRICATION D'UN SYSTÈME DE BENNE BASCULANTE POUR VÉHICULE ET SYSTÈME DE BENNE BASCULANTE POUR VÉHICULE

(30) Priorität: 31.12.2008 DE 102008063418
(43) Veröffentlichungstag der Anmeldung: 09.11.2011
(73) Patentinhaber: Schmitz Cargobull Gotha GmbH, 99867 Gotha (DE)
(72) Erfinder: VOLZ, Siegfried, 89610 Oberdischingen (DE)
(74) Vertreter: Baur & Weber Patentanwälte PartG mbB
(86) Internationale Anmeldenummer: PCT/EP2009/067503
(87) Internationale Veröffentlichungsnummer: WO 2010/076240

(56) Entgegenhaltungen:
- EP-A1- 1 566 553
- WO-A1-2006/047848
- US-A- 6 022 068

## Beschreibung

Die Erfindung betrifft ein Verfahren zur Herstellung einer Fahrzeug-Kippmuldenanordnung und eine danach hergestellte Fahrzeug-Kippmuldenanordnung.

Gebräuchliche Fahrzeug-Kippmuldenanordnungen weisen Muldenkörper mit einer Bodenfläche, zwei Seitenwänden, einer Stirnwand und einem Heckteil auf, welches in verschiedenen Bauweisen eine Entladeöffnung verschließen kann. Die Stirnwand enthält Elemente zur Anbindung eines hydraulischen Pressenzylinders zur Anhebung des stirnwandseitigen Endes der um eine heckseitige horizontale Kippachse kippbaren Kippmulde.

Für einen gewichtsparenden und kostengünstigen Aufbau des Kippmuldenkörpers bestehen die Bodenfläche und die Seitenwände typischerweise aus Blechplatten, welche an zur Längsrichtung des Muldenkörpers parallelen Kanten miteinander verbunden sind. Die Verbindung der Seitenwandplatten mit der Bodenplatte kann durch Schweißen oder durch Kaltfügeverbindungen, wie Bolzen, Schrauben oder Nieten erfolgen. Die miteinander verbundenen Längskanten von Bodenplatte und Seitenwänden liegen typischerweise in einem gerundeten Übergangsbereich, in welchem sowohl die unteren Endbereiche der Seitenwände als auch die seitlichen Bereiche der Bodenplatte gewölbt sind. Bekannt sind auch Kippmulden mit zwei Halbschalen, welche entlang einer Stoßfuge bei der Mittellängsebene verschweißt sind. Stirnwand und Heckteil können mit Bodenfläche und Seitenwänden durch Verschweißen und/oder durch Kaltfügeverbindungen der genannten Art verbunden sein. Typischerweise besteht die Bodenplatte aus einem Stahlblech hoher Brinell-Härte, insbesondere einer Härte von wenigstens 450 HBW, wogegen die Seitenwände aus einem kostengünstigeren Standardstahl bestehen. Die Seitenwände können vollständig oder zumindest überwiegend mit einer korrosionsschützenden Beschichtung versehen sein, welche beispielsweise durch Feuerverzinken auf verzinkbare Teile des Muldenkörpers aufgebracht werden kann. Das eine wesentlich höhere Härte aufweisende Bedenblech ist typischerweise nicht verzinkbar. Bekannt ist auch eine Beschichtung des Muldenkörpers oder Teilen hiervon in einem KTL-Verfahren.

Die EP 1566553 A1 beschreibt ein Nutzfahrzeug-Chassis, bei welchem Längsträger und Querträger über Knotenbleche mittels Pressnietverbindungen nach Art von Clinch-Verbindungspunkten miteinander verbunden werden. Die WO 2006/047848 A1 beschreibt ein Clinch-Werkzeug. Aus der US 6022068 9 ist eine Fahrzeug-Kippmulde bekannt, welche aus Blechen großer Brinell-Härte aufgebaut ist, wobei die Dicke des Bodenblechs nach hinten stufenweise zunimmt.

Der vorliegenden Erfindung liegt die Aufgabe zugrunde, ein Verfahren zur Herstellung einer Fahrzeug-Kippmuldenanordnung und eine Farzeugkippmuldenanordnung anzugeben, bei welcher der Muldenkörper hinsichtlich Kosten- und Herstellungsaufwand Verbesserungen gegenüber gebräuchlichen Muldenkörpern zeigt.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Bei der Verbindung von aus Blechen bestehenden oder Blechflächen enthaltenden Komponenten des Muldenkörpers an überlappenden Blechflächen durch Kaltfügeverbindungen erweisen sich Verbindungen mit Ausdrückungen aus einer der Blechflächen in Richtung der anderen Blickfläche als besonders vorteilhaft. Als Ausdrückung sei eine lokale, annähernd punktförmige dauerhafte Verformung des Bleches aus der in der Umgebung der Ausdrückung als im wesentlichen eben anzusehenden Blechfläche heraus verstanden. Dabei kann vorteilhafterweise eine formschlüssige Abstützung der beiden verbundenen Bleche gegen Verschiebungen parallel zu den überlappenden Blechabschnitte durch die an den Fügestellen ineinandergreifenden Bleche selbst erreicht werden.

In einer nicht beanspruchten Ausführung können solche Ausdrückungen als ClinchVerbindungen ausgeführt sein, bei welchen bei Herstellung der Ausdrückungen beide Bleche gleichzeitig verformt werden. Vorteilhafterweise können durch Clinchen eine Vielzahl von Materialien der Bleche miteinander verbunden werden. Die Verbindung durch Clinchen besitzt auch den Vorteil, dass auf die zu verbindenden Blechflächen oder zumindest einige dieser Blechflächen bereits zuvor eine korrosionsschützende Beschichtung, insbesondere eine Verzinkung, aufgebracht werden kann. Die Verbindung von Blechflächen durch Clinchen ist vorteilhafterweise auch ohne Erhitzen der zu verbindenden Blechflächenabschnitte möglich, so dass deren besondere, beispielsweise zur Erzielung einer bestimmten Härte beeinflußte Gefügestruktur nicht verändert wird. Auch eine korrosionsschützende, zuvor aufgebrachte Beschichtung bleibt bei der Verbindung durch Clinchen, insbesondere bei der bevorzugten Erzeugung von runden Clinchpunkten im wesentlichen erhalten. Bei Clinchverbindungen sind keine separat einzusetzenden Verbindungselemente erforderlich.

Eine Verbindung von Blechflächen durch Clinchen ist von besonderem Vorteil für die Verbindung von Seitenwandblechen und einem Bodenblech entlang zur Längsrichtung verlaufender Kanten mit geringfügiger Überlappung der Seitenränder des Bodenblechs mit den unteren Rändern der Seitenwandbleche. Die Clinchpunkte werden vorzugsweise durch Drücken von innen nach außen erzeugt und stehen dadurch typischerweise über die Außenfläche der verbundenen Bleche über. Die dabei an der Innenfläche entstehenden Vertiefungen können vorteilhafterweise nachträglich durch ein Füllmaterial und/oder durch Stopfen verschlossen werden, wenn vermieden werden soll, dass sich darin Reste von Transportgut ansammeln und festsetzen.

Die beanspruchte Ausführungsform sieht vor, dass die Ausdrückungen in einem der zu verbindenden Bleche als jeweils einen Durchbruch durch die Blechfläche umgebende und gegen die die Ausdrückung umgebende Blechfläche überstehende Struktur ausgeführt ist, welche am Rand eines Durchbruchs des anderen Bleches anliegt. Eine formschlüssige Abstützung der Bleche gegen eine Verschiebung gegeneinander parallel zu den überlappenden Blechrändern erfolgt durch Anlage der aus dem einen Blech ausgedrückten Struktur am Rand des Durchbruchs des anderen Blechs und somit direkt zwischen den beiden Blechen. Die beiden Bleche sind durch Befestigungselemente, welche die Durchbrüche beider Bleche durchgreifen, in Richtung der Flächennormalen der überlappenden Blechränder gegeneinander verspannt. Solche Befestigungselemente können insbesondere Niete oder vorzugsweise Schrauben sein.

In bevorzugter Ausführung sind bei Verbindungen bei überlappenden Blechabschnitten, von welchen einer dem Laderaum der Kippmulde zugewandt und der andere dem Laderaum abgewandt liegt, die Ausdrückungen in dem dem Laderaum zugewandten Blechabschnitt ausgebildet. Vorteilhafterweise sind dabei die auf der Laderaumseite liegenden Ränder der Ausdrückung trichterförmig schräg ausgebildet und die Befestigungselemente weisen Senkkopfenden auf, welche an den trichterförmigen Rändern anliegen und nicht oder nur gering über die Blechfläche des dem Laderaum zugewandten Blechabschnitts in den Laderaum überstehen.

Um eine gegen das Ausfallen von Transportgut dichte Verbindung überlappender Blechränder zu erzeugen, kann die Anordnung der Gesamtheit der Verbindungspunkte mit den Ausdrückungen, insbesondere deren Abstand in Längsrichtung der überlappenden Randbereiche jeweils geeignet gewählt werden. Der Abstand benachbarter Verbindungspunkte liegt vorteilhafterweise zwischen 10 cm und 50 cm. Als Maßnahme zur Abdichtung kann auch ein Dichtmaterial zwischen die sich überlappenden Blechflächen eingebracht werden.

Als Material für den Laderaum einer Kippmulde begrenzende, miteinander zu verbindende Blechflächen, insbesondere als Material für die Seitenwandbleche und das Bodenblech, wird vorteilhafterweise ein Stahl mit einer Brinell-Härte zwischen 200 HBW und 450 HBW, insbesondere zwischen 250 HBW und 400 HBW gewählt. Vorteilhafterweise wird ein Stahlmaterial gewählt, welches vorzugsweise durch Feuerverzinken, alternativ auch durch Spritzverzinken mit einer korrosionsschützenden Zink-Beschichtung versehen werden kann. Vorteilhafterweise kann für Seitenwände und Bodenfläche dasselbe Stahlmaterial, erforderlichenfalls in verschiedenen Blechdicken gewählt sein. Die Blechdicken liegen vorteilhafterweise zwischen 2 mm und 8 mm für die Seitenwände und zwischen 3 mm und 10 mm für das Bodenblech.

Die nicht beanspruchte Herstellung eines zwei Seitenwände und eine Bodenfläche enthaltenden Muldenkörpers einer Kippmulde aus einem beide Seitenwände und die Bodenfläche enthaltenen ebenen Blechzuschnitt ist vom Herstellungsaufwand besonders vorteilhaft. Der ebene Blechzuschnitt wird danach durch Umbiegen in den Übergangsbereichen zwischen Seitenwänden und Bodenfläche umgeformt zu dem im Querschnitt im wesentlichen U-förmigen Mittelteil des Muldenkörpers mit Seitenwänden und Bodenfläche.

In einer ersten Ausführungsform kann der ebene Blechzuschnitt durch ein die Bodenfläche und beide Seitenwände bildendes, in der Blechfläche fügestellenfrei durchgehendes einteiliges Blech gebildet sein. In anderer Ausführungsform kann der ebene Blechzuschnitt aus mehreren gefügten Blechen zusammen gesetzt sein, welche über Kaltfügeverbindungen oder über Schweißnähte miteinander verbunden sind.

Der ebene Blechzuschnitt kann insbesondere in verschiedenen Bereichen unterschiedliche Blechdicken besitzen, wobei typischerweise die Blechdicke im Bereich der Seitenwände geringer ist als im Bereich der Bodenfläche. Bei einem zusammengefügten ebenen Blechzuschnitt können vorteilhafterweise auch unterschiedliche Blechmaterialien zum Einsatz kommen.

Unterschiedliche Blechdicken können in einer ersten Ausführungsform in großflächigen Teilbereichen des Blechzuschnitts in sich einheitlich sein und beispielsweise erzeugt werden, indem einzelne Bleche unterschiedlicher Dicke und eventuell unterschiedlicher Materialzusammensetzung zu dem Blechzuschnitt zusammengefügt werden. In anderer Ausführung kann auch bereits bei der Blecherzeugung im Stahlwerk ein Walzvorgang so eingestellt werden, dass in verschiedenen Flächenbereichen unterschiedliche Blechdicken entstehen. Dabei kann sowohl ein quer zur Längsrichtung gestufter Verlauf der Blechdikken mit dünneren Seitenwandabschnitten und dickerem Bodenflächenabschnitt hergestellt werden, als auch ein kontinuierlicher Verlauf zwischen einer Maximaldicke in der Mitte der Bodenfläche und einer minimalen Dicke an der Oberkante der Seitenwandflächen, was walztechnisch günstiger ist als die gestufte Form. Bei der kontinuierlichen Abnahme der Blechdicke von der Mitte der Bodenfläche bis zur Oberkante der Seitenwand, welche in dem ebenen Blechzuschnitt durch die Außenkanten des Blechzuschnitts gebildet sind, kann vorteilhafterweise auch vorgesehen sein, dass zwei bezüglich der Mittellängsebene symmetrische Hälften des Blechzuschnitts mit in konischem Verlauf von einer dickeren Seitenkante zu einer dünneren Seitenkante abnehmender Blechdicke erzeugt und danach entlang der dickeren Seitenkanten, welche dann in der Mitte der Bodenfläche liegen, verbunden, insbesondere verschweißt werden oder über Kaltfügeverbindungen, vorzugsweise Clinchen verbunden. Die einzeln hergestellten Teile des Blechzuschnitts enthalten dabei die Fläche einer Seitenwand und eine halbe Bodenfläche. Die getrennt hergestellten Teilzuschnitte können auch vor dem Zusammenfügen in Übergangsbereichen zwischen der Bodenfläche und den Seitenwandflächen umgebogen werden und als zwei L-förmige Teile entlang der Mittellängsebene des Mittelteils des Muldenkörpers miteinander verbunden, insbesondere verschweißt werden.

Für Seitenwände und/oder Bodenfläche können auch mehrlagige Bleche eingesetzt werden, wodurch die unterschiedlichen Anforderungen an die dem Innenraum zugewandte Blechfläche und die nach außen weisende Blechfläche vorteilhaft vereint werden können. Durch mehrlagige Bleche können insbesondere auch teurere Stahlsorten für hohe Beanspruchungen mit billigen Stahlsorten für geringe Beanspruchung kombiniert werden. Durch mehrlagige Bleche können vorteilhafterweise auch andere vorteilhafte Blecheigenschaften, wie beispielsweise Beulsteifigkeit und Gewicht günstig beeinflußt werden.

Insbesondere die Blechflächen der Seitenwände können vorteilhafterweise auch mit einer Reliefstruktur versehen werden, welche bei geringer Blechdicke und damit geringem Gewicht der Seitenwandflächen eine deutliche Verbesserung der Festigkeit, insbesondere der Beulsteifigkeit erbringen können.

Die Erfindung ist nachfolgend anhand von Ausführungsbeispielen unter Bezugnahme auf die Abbildungen noch eingehend veranschaulicht. Dabei zeigt:
- Fig. 1: Komponenten einer Muldenanordnung,
- Fig. 2: eine Schnittdarstellung einer Boden-Wand-Clinchverbindung,
- Fig. 3: eine Schnittdarstellung der beanspruchten Kaltfügeverbindung,
- Fig. 4: einen ebenen Blechzuschnitt,
- Fig. 5: ein durch Umbiegen aus diesem geformtes Mittelteil eines Muldekörpers,
- Fig. 6: einen Ausschnitt eines Blechquerschnitts mit einer Blechstärkenstufe,
- Fig. 7: einen Querschnitt eines Blechzuschnitts mit bikonischer Form.

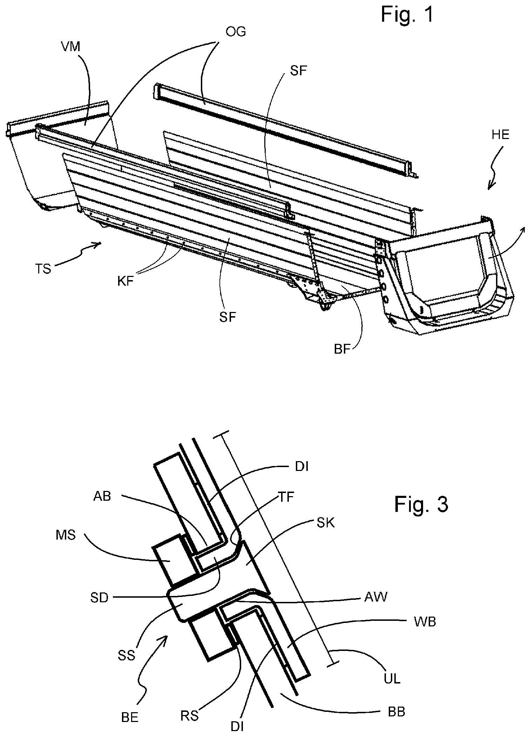

Fig. 1 zeigt eine Zusammenstellung mehrerer Komponenten eines Muldenkörpers, welche insbesondere ein Mittelteil TS, zwei an den Oberkanten der Seitenwände zu befestigende Obergurte OG, ein Vorderwandmodul VM und ein Heckteil HE sowie diverse Anbauteile am Boden und am hinteren Ende des Mittelteils enthält. Die einzelnen Komponenten des Muldenkörpers werden vorzugsweise über Kaltfügeverbindungen miteinander verbunden, können aber auch miteinander verschweißt werden. Das Mittelteil enthält insbesondere zwei Seitenwandflächen SF und eine Bodenfläche BF. Die Längsrichtung des Muldenkörpers ist mit x, die dazu horizontale Querrichtung mit y bezeichnet.

Die Bleche der Seitenwandflächen sind vorteilhafterweise mit dem die Bodenfläche bildenden Blech entlang von Überlappungsbereich bei Längskanten der Bleche über Kaltfügeverbindungen KF verbunden, welche Ausdrückungen einer der überlappenden Blechflächen in Richtung der anderen Blechfläche aufweisen und eine gegenseitige Abstützung der beiden Bleche direkt gegeneinander gegen Verschiebungen parallel zu den Blechflächen bewirken.

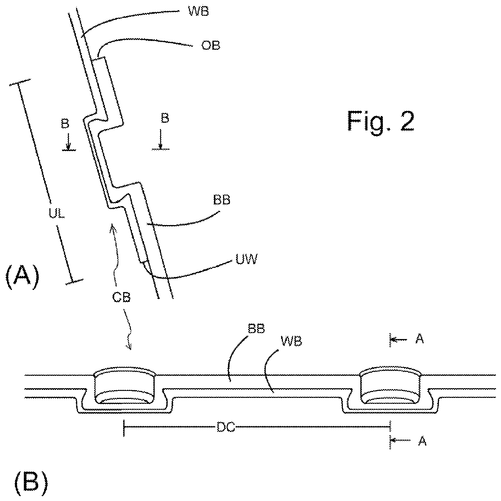

In Fig. 2 ist eine Verbindung eines Seitenwandbleches WB mit einem Bodenblech BB mittels Clinchverbindungen in einer y-z-Schnittebene (Fig. 2A) und in einer x-y-Schnittebene (Fig. 2B) gezeigt. Das dickere Bodenblech BB ist in dem sich zwischen Oberkante OB des Bodenblechs BB und Unterkante UW des Seitenwandblechs WB erstreckenden Überlappungsbereich UL bezüglich des Muldentransportvolumens innenliegend angeordnet und im Bereich der runden Clinchpunkte CB nach außen in das außenliegende dünnere Seitenwandblech eingedrückt. Der Abstand der Clinchpunkte ist mit DC angegeben. Die Clinchpunkte sind vorteilhafterweise in einer in Längsrichtung parallel zu den Blechkanten OB, UW verlaufenden Reihe angeordnet. Die Clinchpunkte können vorteilhafterweise mittels an sich bekannter Vorrichtungen zu mehreren gleichzeitig erzeugt werden. Die Clinchpunkte können auch in mehreren Reihen angeordnet sein. Zwischen Bodenblech BB und Seitenwandblech WB kann im Überlappungsbereich ein Dichtmaterial eingefügt sein.

Fig. 3 zeigt eine andere vorteilhafte Ausbildung einer Kaltfügeverbindung mit einer Blechausdrückung zur Verbindung eines Seitenwandblechs WB mit einem Bodenblech. In dieser Ausführung ist in dem im Überlappungsbereich UL dem Laderaum einer Kippmulde zugewandten Seitenwandblech WB ein Durchbruch AW erzeugt, welcher durch eine aus der Blechfläche des Seitenwandblechs vom Laderaum weg weisende Ausdrückung in Form einer den Durchbruch AW ringförmig umgebenden Struktur SD umgeben ist. Die Struktur SD bildet einen von der dem Laderaum abgewandten Seite des Seitenwandblechs WB abstehenden Ringstutzen.

In der Blechfläche des Bodenblechs BB sind Durchbrüche AB erzeugt, in welche die Strukturen SD der Ausdrückungen der Seitenwandbleche eingreifen und so eine gegen Verschiebungen der Bleche relativ zueinander parallel zu den Blechflächen formschlüssige Abstützung bewirken. Die Struktur SD ragt im zusammengefügten Zustand wenigstens bis zur halben Dicke des Bodenblechs BB in dessen Durchbruch AB. Vorzugsweise ragt die Struktur SD vollständig durch den Durchbruch AB hindurch und ist an einem auf der Außenseite überstehenden Ende von einer Ringscheibe RS umgeben. Zwischen Seitenwandblech WB und Bodenblech BB ist im skizzierten Beispiel eine Dichtung DI eingefügt. Ein Befestigungselement BE, insbesondere ein Niet oder eine Schraube, ragen durch die Durchbrüche beider Blechflächen und verspannt diese gegeneinander.

Von der dem Laderaum zuweisenden Seite des Seitenwandblechs ist die Ausdrückung gegen die in der Umgebung der Ausdrückung als im wesentlichen eben angenommene Blechfläche mit schrägen Flanken TF trichterförmig ausgebildet. Das Befestigungselement BE weist an seinem dem Laderaum zuweisenden Ende einen Senkkopf SK auf, welcher in der Trichterform TF einliegt und nicht oder nur gering über die Ebene der dem Laderaum zuweisenden Seite des Wandblechs WB übersteht. Das Befestigungselement BE, welches vorzugsweise als Schraube mit einer auf das Gewinde eines Schraubenschafts SS aufgeschraubten Mutter MS ausgeführt ist, ist vorteilhafterweise nicht durch Scherkräfte belastet und nur auf Zug beansprucht.

In anderer Ausführung kann auch in dem Überlappungsabschnitt UL das Bodenblech BB innenliegend und das Seitenwandblech WB außenliegend angeordnet sein.

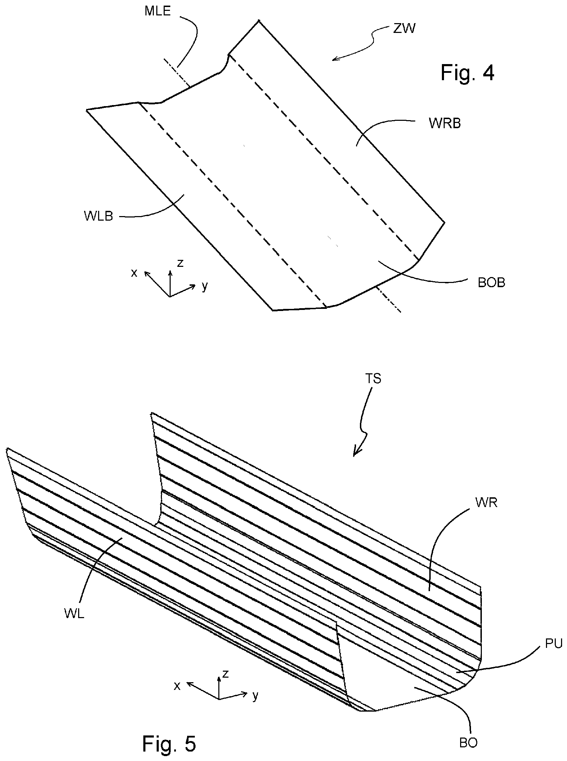

Fig. 4 zeigt einen ebenen Blechzuschnitt ZW, aus welchem ein in Fig. 5 skizziertes Mittelteil TS eines Muldenkörpers mit Seitenwänden WL, WR und einer Bodenfläche BO erzeugt werden kann, indem im Übergangsbereich zwischen Bodenfläche BO und Seitenwänden WL, WR der Blechzuschnitt umgebogen wird, beispielsweise durch mehrfaches Abkanten.

In dem ebenen Zuschnitt sind der die spätere Bodenfläche BO bildende Flächenbereich mit BOB und die die späteren Seitenwände WR, WL bildenden Flächenbereiche mit WLB, WRB bezeichnet. Der ebene Blechzuschnitt kann durch ein einteiliges, fügestellenfrei in der Blechfläche durchgehendes Blech oder durch zusammengefügte Bleche gebildet sein. Bei dem ebenen Blechzuschnitt sind die xyz-Koordinaten aus Fig. 1 für die Bodenfläche übernommen und die gekrümmten Übergangsbereiche PU des Mittelteils des Muldenkörpers liegen in der x-y-Ebene der Bodenfläche. Eventuelle Fügelinien zwischen mit einem Bodenblechabschnitt BOB gefügten Seitenwandabschnitten WLB, WRB verlaufen parallel zur Längsrichtung x. Die z-Richtung bezeichnet die Richtung der Flächennormale der Bodenfläche BO.

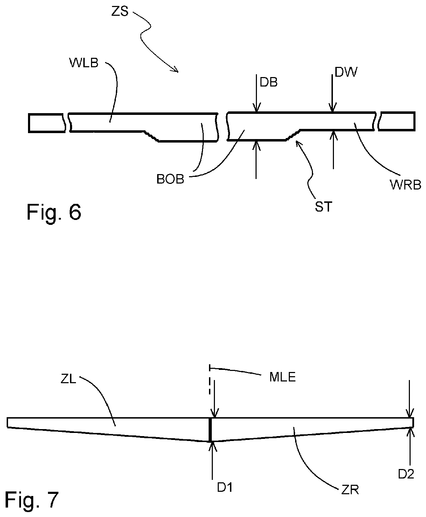

Fig. 6 zeigt einen Ausschnitt aus einem Querschnitt durch einen Blechzuschnitt ZS nach Art der Fig. 4 bei welchem für den Blechabschnitt WRB einer Seitenwand einerseits und den Blechabschnitt BOB der Bodenfläche andererseits unterschiedliche Blechdicken DW bzw. DB vorgesehen sind, welche innerhalb eines kurzen Stufenabschnitts ST in y-Richtung quasi stufenförmig ineinander übergehen. Unterschiedliche Blechdicken können auch erreicht werden, wenn im Bereich der Stufe zwei Bleche unterschiedlicher Dicke miteinander verbunden, insbesondere verschweißt sind.

Fig. 7 zeigt ein weiteres Beispiel mit in y-Richtung variierender Blechdicke. Dabei sind zwei Teil-Zuschnitte ZR, ZL spiegelsymmetrisch bezüglich einer Mittellängsebene MLE geformt. Die Teilzuschnitte verjüngen sich von einer maximalen Dicke D1 bei der Mittellängsebene MLE konisch zu einer minimalen Dikke D2 an den Außenrändern der Teilzuschnitte. Die Teilzuschnitte sind vorzugsweise mit konisch zueinander verstellten Walzen getrennt gefertigt und entlang der Mittellängsebene MLE verbunden, insbesondere verschweißt oder durch Kaltfügeverbindungen, vorzugsweise Clinchen verbunden. Die Verschweißung kann auch erst nach der Umbiegung der getrennten Teilabschnitte ZR, ZL an den Übergangsbereichen PU zu L-förmigen Halbschalen des Mittelteils des Muldenkörpers erfolgen, welche dann zu einer Gesamtschale mit U-förmigem Querschnitt zusammengefügt werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt.

## Patentansprüche

1. Verfahren zur Herstellung einer Fahrzeug-Kippmuldenanordnung, welche einen Muldenkörper enthät, der um eine horizontale heckseltige Kippachse kippbar ist und eine langgestreckte Form aufweist mit im wesentlichen parallelen plattenförmigen Seitenwänden und einer Bodenfläche, welche parallel zur Längsrichtung verlaufen, sowie mit einer Vorderwand und mit einem eine verschließbare Entladeöffnung bildenden Heckteil, wobei Seitenwände und Bodenfläche untereinander durch Kaltfügeverbindungen verbunden werden, **dadurch gekennzeichnet, dass** bei zumindest einem Teil der Kaltfügeverbindungen an überlappenden Blechflächen (WB, BB) von Seitenwänden (SW) und Bodenfläche (BO) an einer der Blechflächen (WB) Ausdrückungen in Richtung der anderen Blechfläche (BB) erzeugt werden, welche erste Durchbrüche (AW) durch die eine Blechfläche (WB) umgeben und gegen diese mit Rändern (SD) in Richtung der anderen Blechfläche (BB) vorspringen, und welche formschlüssig in zweiten Durchbrüchen (AB) der anderen Blechfläche einliegen.

2. Verfahren nach Anspruch 1, **dadurch gekennzeichnet, dass** durch die ersten (AW) und zweiten (AB) Durchbrüche Befestigungselemente (BE) hindurchgeführt und die beiden Blechflächen (WB, BB) mittels der Befestigungselemente gegeneinander verspannt werden.

3. Verfahren nach Anspruch 2, **dadurch gekennzeichnet, dass** die Ausdrükkungen mit schrägen Flanken (TF) als Vertiefungen in der einen Blechfläche (WB) erzeugt und Befestigungselemente (BE) mit Senkkopf-Enden (SK) in die Vertiefungen eingesetzt werden.

4. Verfahren nach einem der Ansprüche 1 bis 3, **dadurch gekennzeichnet, dass** zwischen die in einem Überlappungsbereich (UL) überlappenden Bleche (WB, BB) ein Dichtmaterial (DI) eingebracht wird.

5. Verfahren nach einem der Ansprüche 1 bis 4, **dadurch gekennzeichnet, dass** für Seitenwände und/oder Bodenfläche Stahlbleche mit einer Brinell-Härte zwischen 250 HBW und 400 HBW gewählt wird.

6. Verfahren nach einem der Ansprüche 1 bis 5, **dadurch gekennzeichnet, dass** für Bodenfläche (BO) und/oder Seitenwände (SW) ein verzinkbares Material gewählt wird.

7. Verfahren nach einem der Ansprüche 1 bis 6, **dadurch gekennzeichnet, dass** zumindest für Bodenfläche und/oder Seitenwände ein mehrschichtiges Blech verwendet wird.

8. Fahrzeug-Kippmuldenanordnung, welche nach einem Verfahren nach einem oder mehreren der Ansprüche 1 bis 7 hergestellt ist und bei welcher Blechflächen (WB, BB) von Seitenwänden (SW) und Bodenfläche (BO) in Überlappungsbereichen (UL) entlang von Blechkanten über Kaltfügestellen verbunden sind, **dadurch gekennzeichnet, dass** bei von einer Blechfläche (WB) Ausdrückungen, welche erste Durchbrüche (AW) durch die eine Blechfläche (WB) umgeben und gegen diese mit Rändern (SD) in Richtung der anderen Blechfläche (BB) vorspringen, in zweiten Durchbrüchen (AB) der anderen Blechfläche (BB) einliegen und parallel zur Blechfläche eine formschlüssige Festlegung zwischen den Blechflächen (WB, BB) bewirken.

## Claims

1. Method for the production of a dump body arrangement for a vehicle, which contains a dumper body which is tippable about a horizontal, rear-side tipping axis and has an elongate shape with substantially parallel panel-shaped side walls and a bottom surface, which side walls and bottom surface run parallel to the longitudinal direction, and with a front wall and with a rear part forming a closable unloading opening, wherein side walls and bottom surface are connected to one another by cold joining connections, **characterized in that**, in at least some of the cold joining connections on overlapping sheet-metal surfaces (WB, BB) of side walls (SW) and bottom surface (BO), pressed-out protuberances are produced on one of the sheet-metal surfaces (WB) in the direction of the other sheet-metal surface (BB), said pressed-out protuberances surrounding first apertures (AW) through the one sheet-metal surface (WB) and projecting towards said apertures with edges (SD) in the direction of the other sheet-metal surface (BB), and being inserted in a form-fitting manner in second apertures (AB) of the other sheet-metal surface.

2. Method according to Claim 1, **characterized in that** fastening elements (BE) are guided through the first apertures (AW) and second apertures (AB), and the two sheet-metal surfaces (WB, BB) are braced against each other by means of the fastening elements.

3. Method according to Claim 2, **characterized in that** the pressed-out protuberances with oblique flanks (TF) are produced as depressions in the one sheet-metal surface (WB), and fastening elements (BE) with countersunk head ends (SK) are inserted into the depressions.

4. Method according to one of Claims 1 to 3, **characterized in that** a sealing material (DI) is introduced between the metal sheets (WB, BB) which overlap in an overlapping region (UL).

5. Method according to one of Claims 1 to 4, **characterized in that** steel sheets with a Brinell hardness of between 250 HBW and 400 HBW are selected for side walls and/or bottom surface.

6. Method according to one of Claims 1 to 5, **characterized in that** a galvanizable material is selected for bottom surface (BO) and/or side walls (SW).

7. Method according to one of Claims 1 to 6, **characterized in that** a multi-layered metal sheet is used at least for bottom surface and/or side walls.

8. Dump body arrangement for a vehicle, which is produced according to a method according to one or more of Claims 1 to 7 and in which sheet-metal surfaces (WB, BB) of side walls (SW) and bottom surface (BO) are connected in overlapping regions (UL) along sheet-metal edges via cold joints, **characterized in that**, with pressed-out protuberances from a sheet-metal surface (WB), said pressed-out protuberances surround first apertures (AW) through the one sheet-metal surface (WB) and project towards said apertures with edges (SD) in the direction of the other sheet-metal surface (BB), are inserted in second apertures (AB) of the other sheet-metal surface (BB) and, parallel to the sheet-metal surface, bring about a form-fitting fixing between the sheet-metal surfaces (WB, BB).

## Revendications

1. Procédé de fabrication d'un système de benne basculante de véhicule qui comprend un corps de benne qui peut basculer autour d'un axe de basculement arrière horizontal et qui présente une forme allongée avec des parois latérales en forme de plaques essentiellement parallèles et une surface de fond, qui s'étendent parallèlement à la direction longitudinale, ainsi qu'avec une paroi avant et une partie arrière formant une ouverture de déchargement refermable, les parois latérales et la paroi de fond étant connectées les unes aux autres par des connexions par assemblage à froid, **caractérisé en ce que** dans le cas d'au moins une partie des connexions par assemblage à froid, au niveau de surfaces en tôle se chevauchant (WB, BB) de parois latérales (SW) et de la surface de fond (BO), des impressions en relief sont produites au niveau de l'une des surfaces en tôle (WB) dans la direction de l'autre surface en tôle (BB), lesquelles entourent des premiers orifices (AW) à travers l'une des surfaces en tôle (WB) et font saillie par rapport à ceux-ci avec des bords (SD) dans la direction de l'autre surface en tôle (BB), et lesquelles s'insèrent par engagement par correspondance de formes dans des deuxièmes orifices (AB) de l'autre surface en tôle.

2. Procédé selon la revendication 1, **caractérisé en ce que** des éléments de fixation (BE) sont guidés à travers les premiers (AW) et les deuxièmes (AB) orifices et les deux surfaces en tôle (WB, BB) sont serrées l'une contre l'autre au moyen des éléments de fixation.

3. Procédé selon la revendication 2, **caractérisé en ce que** les impressions en relief sont produites avec des flancs obliques (TF) en tant que renfoncements dans l'une des surfaces en tôle (WB) et des éléments de fixation (BE) avec des extrémités à tête fraisée (SK) sont insérés dans les renfoncements.

4. Procédé selon l'une quelconque des revendications 1 à 3, **caractérisé en ce qu'**entre les tôles se chevauchant (WB, BB) dans une région de chevauchement (UL) est introduit un matériau d'étanchéité (DI).

5. Procédé selon l'une quelconque des revendications 1 à 4, **caractérisé en ce que** pour des parois latérales et/ou la surface de fond, on choisit des tôles en acier ayant une dureté Brinell comprise entre 250 HBW et 400 HBW.

6. Procédé selon l'une quelconque des revendications 1 à 5, **caractérisé en ce que** pour la surface de fond (BO) et/ou des parois latérales (SW), on choisit un matériau galvanisable.

7. Procédé selon l'une quelconque des revendications 1 à 6, **caractérisé en ce qu'**au moins pour la surface de fond et/ou des parois latérales, on utilise une tôle multicouche.

8. Système de benne basculante pour véhicules, fabriqué selon un procédé selon l'une quelconque ou plusieurs des revendications 1 à 7, et dans lequel des surfaces en tôle (WB, BB) de parois latérales (SW) et une surface de fond (BO) sont connectées dans des régions de chevauchement (UL) le long d'arêtes en tôle par le biais de zones d'assemblage à froid, **caractérisé en ce que** des impressions en relief d'une surface en tôle (WB), qui entourent des premiers orifices (AW) à travers l'une des surfaces en tôle (WB) et qui font saillie contre celle-ci avec des bords (SD) dans la direction de l'autre surface en tôle (BB), s'insèrent dans des deuxième orifices (AB) de l'autre surface en tôle (BB) et réalisent, parallèlement à la surface en tôle, une fixation par engagement par correspondance de formes entre les surfaces en tôle (WB, BB).
